# FASCICULE DE BREVET EUROPEEN

(11) **EP 0 430 744 B1**
(45) Date de publication et mention de la délivrance du brevet: **29.05.1996**
(21) Numéro de dépôt: 90403205.9
(22) Date de dépôt: 13.11.1990
(51) Int. Cl.: B01J 37/02

(54) **Catalyseurs supportés et procédé de fabrication de ceux-ci**
Katalysatoren auf Träger und Verfahren zur Herstellung derselben
Supported catalysts and process for producing the same

(30) Priorité: 27.11.1989 FR 8915542
(43) Date de publication de la demande: 05.06.1991
(73) Titulaire: RHONE-POULENC CHIMIE, 92408 Courbevoie Cédex (FR)
(72) Inventeur: Chopin, Thierry, F-93200 Saint Denis (FR); Blanchard, Gilbert, F-60330 Lagny-Le-Sec (FR)
(74) Mandataire: Dubruc, Philippe

(56) Documents cités:
- EP-A- 0 361 952
- FR-A- 1 004 588
- US-A- 2 606 159
- US-A- 2 695 893
- US-A- 4 020 012
- US-A- 4 136 063
- US-A- 4 465 789
- D3 (US-A-4 591 580) et D4(EP-A-0 251 752), cités dans l'examen, n'appartiennent pas aux documents cités dans le rapport de recherche.

## Description

La présente invention concerne un catalyseur supporté et un procédé de fabrication de celui-ci.

Par catalyseur supporté, on entend un catalyseur comprenant un support constitué par un matériau poreux sur la surface duquel des éléments actifs sont déposés notamment par un procédé d'imprégnation.

Elle se rapporte plus particulièrement à un catalyseur dont au moins un élément actif a été déposé sur une partie du support, à savoir une couronne périphérique.

Les catalyseurs supportés sont connus depuis très longtemps et utilisés dans de nombreux procédés tels que traitement des coupes pétrolières, traitement des effluents comme le traitement des gaz d'échappement des moteurs à combustion interne.

Ces catalyseurs comprennent généralement un support obtenu par mise en forme d'une matière poreuse telle que de l'alumine. Ainsi ces supports peuvent présenter des formes diverses telles que sphères, extrudés cylindriques, à section polylobée ou à section de formes diverses telles que roue de charrette, par exemple.

Les matières poreuses généralement employées sont l'alumine, la silice, la résine, les zéolites, ou analogue.

Ces supports présentent généralement une surface spécifique élevée, par exemple supérieure à 20 m²/g, pour ainsi obtenir une grande surface rendue catalytiquement active, par le dépôt d'éléments actifs.

Comme éléments actifs, on peut distinguer plusieurs catégories:
- des éléments catalytiquement actifs proprement dits qui sont généralement des éléments de la famille du platine, comme le palladium, le rhodium...
- des éléments promoteurs qui favorisent l'activité catalytique des éléments ci-dessus.

Actuellement, des différents éléments, à l'exclusion des éléments de la famille du platine et plus précisément de l'élément platine, sont généralement imprégnés sur la surface complète du support. En effet, il n'est pas possible de contrôler la profondeur de pénétration de l'élément dans le support et la concentration de cet élément dans chaque partie de la surface.

Or, compte tenu de la vitesse de diffusion des réactifs dans le catalyseur, il est connu que seule une partie périphérique du catalyseur est efficace. En conséquence, une partie seulement des éléments déposés sera réellement efficace.

Comme les éléments actifs sont généralement des matériaux très onéreux et affectent de manière significative le coût de revient d'un procédé, on a cherché depuis très longtemps à diminuer la quantité d'éléments actifs dans les catalyseurs tout en conservant un niveau d'activité catalytique élevé et au moins équivalent.

Une solution à ce problème a été proposée par Hoesktra et décrite dans le brevet américain n° 3674680.

Cette solution consiste brièvement à conformer le support ou le catalyseur à des formes particulières pour obtenir un catalyseur dont l'épaisseur soit au plus égale à 2 fois l'épaisseur de la couche de diffusion des réactifs. Ainsi, la majeure partie du catalyseur est en contact avec les réactifs.

Toutefois, cette contrainte d'épaisseur impose des formes complexes conduisant à des catalyseurs fragiles et coûteux à fabriquer.

Une solution a été également proposée pour l'imprégnation des métaux de la famille du platine permettant de réaliser cette imprégnation uniquement dans une couronne périphérique du support. Toutefois, ce procédé qui utilise une solution de sel de platine n'est pas transposable pour le dépôt des autres éléments, tels que les métaux de transition ou les terres rares par exemple.

Un des buts de la présente invention est notamment de remédier à ces inconvénients en proposant un procédé permettant d'imprégner des éléments autres que les éléments de la famille du platine sur une couronne périphérique d'épaisseur déterminée d'un support, et des catalyseurs comprenant une teneur homogène en éléments actifs sur une couronne périphérique du support.

A cet effet, comme indiqué dans la revendication indépendante 1, l'invention propose un catalyseur constitué par un support formé par mise en forme d'un matériau poreux sur la surface duquel ont été déposés des éléments actifs, caractérisés en ce que au moins un desdits éléments actifs, le cérium est déposé de manière homogène en concentration sur une couronne périphérique dudit support, ladite couronne ayant une largeur déterminée.

Avantageusement, la largeur de la couronne périphérique est sensiblement égale à la profondeur de diffusion des réactifs dans le catalyseur considéré.

Ainsi, la totalité ou presque la totalité des éléments actifs sont en contact avec les réactifs, permettant d'obtenir une activité du catalyseur au moins équivalente à celle d'un catalyseur classique, avec une masse d'éléments actifs nettement plus faible.

Selon un mode de réalisation préféré de l'invention, la largeur de la couronne périphérique est constante.

En outre, le matériau poreux formant le support comprend des sites de surface actifs. En effet, la plupart des matériaux poreux utilisés pour former des supports de catalyseur sont des oxydes minéraux qui, en suspension dans une solution aqueuse, tendent à se polariser et deviennent électriquement chargés, comme cela est expliqué dans l'article de J.P. Brunelle "Préparation of catalysts by adsorption of metal complexes on mineral oxides" publié dans Fine.Appl.Chem 50, 9-10 (1978) p 211 et s.

Ainsi, la plupart des oxydes minéraux sont amphotères, c'est-à-dire que les sites réactifs de surface peuvent aussi bien réagir avec des composés électronégatifs (anions) que des composés électropositifs (cations).

Le pH pour lequel on obtient une neutralité électrique de la surface correspond au point isoélectrique du matériau.

Par ailleurs, le caractère amphotère, acide ou basique sera plus ou moins fort que la concentration en sites réactifs sera élevée quand on s'éloignera du point isoélectrique du matériau.

Comme exemples d'oxydes minéraux à caractère amphotère on peut citer, l'alumine, l'oxyde de titane, l'oxyde de zirconium, l'oxyde de cérium. Les oxydes de zinc et de magnésium ont un caractère basique. La silice a également un caractère amphotère mais peu marqué.

Les supports convenables pour l'invention sont donc ceux constitués par un matériau poreux présentant un caractère amphotère, acide ou basique.

Toutefois, les matériaux convenables pour l'invention doivent également pouvoir être mis en forme par tout procédé connu, comme par exemple, extrusion, moulage, granulation ou analogue.

Bien entendu, les oxydes minéraux peuvent être utilisés seuls ou en mélanges et peuvent contenir des additifs comme par exemple des agents de stabilisation.

Le catalyseur de l'invention est obtenu par imprégnation du support au moyen d'une solution colloïdale d'un composé de l'élément à déposer, appelée également "sol". En effet, un sol est un équilibre métastable qui peut être détruit par variation du pH. Ainsi, quand le sol pénètre dans les pores du support, les sites réactifs de surface de celui-ci modifient le pH du sol et provoquent le dépôt de l'élément, la phase liquide du sol continuant sa diffusion vers le centre du support.

Comme la vitesse de diffusion est constante en tout point du support, et la concentration en sites réactifs homogènes dans le support, la neutralisation du sol se fera sur un front de profil parallèle et identique au profil de la surface extérieure du support.

Toutefois, pour obtenir une pénétration des éléments dans les pores du support, il est nécessaire que les dimensions des colloïdes formant le sol soient inférieures au diamètre des pores du support et notamment des micropores qui sont ceux qui forment la majeure partie de la surface.

Par ailleurs, la largeur de la couronne périphérique dans laquelle est déposé l'élément, est déterminée et contrôlée par la valeur du pH du sol imprégné.

La teneur en élément déposé est quant à elle contrôlée par la concentration du sol en cet élément.

Ainsi, à titre d'exemple, pour un support constitué d'alumine dont les micropores ont généralement un diamètre inférieur à 1000 Å (100 nm), de préférence inférieure à 100 Å (10 nm), les sols convenables sont ceux comprenant des colloïdes ayant une dimension inférieure à 1000 Å (100 nm), de préférence à 100 Å (10 nm), par exemple de l'ordre de 80 Å (8 nm) ou moins. Des sols d'oxyde de cérium qui présentent des colloïdes de l'ordre de 60 Å (6 nm) sont tout à fait convenables et permettent d'obtenir des catalyseurs à base d'alumine contenant du cérium déposé uniquement sur une couronne périphérique du support.

La concentration en éléments dans la couronne périphérique n'est pas critique et est déterminée en fonction de l'élément déposé et du catalyseur à obtenir.

Avantageusement, la concentration en élément ci-dessus est voisine ou égale à zéro dans le reste du support.

L'imprégnation du support est réalisée par toutes les techniques connues. Toutefois, la technique de l'imprégnation à sec est préférée car elle permet de mieux contrôler la largeur de la couronne imprégnée.

Par imprégnation à sec, on entend un procédé qui consiste à imprégner un support poreux avec un volume de solution ou sol sensiblement égal au volume poreux du support.

Le support ainsi imprégné est ensuite séché puis traité thermiquement pour activer le catalyseur.

Comme solutions colloïdales d'un composé de cérium, on peut citer les solutions colloïdales d'hydroxyde de cérium, d'hydroxynitrate de cérium ou tout autre composé susceptible d'être décomposé en oxyde cérique par traitement thermique.

La concentration en cérium, exprimée en oxyde de cérium, dans la solution colloïdale d'imprégnation n'est pas critique et est fonction de la quantité de cérium désirée dans le catalyseur. Toutefois, selon un mode préféré de l'invention, cette concentration peut être comprise entre 20 et 400 g/l (exprimée en CeO₂).

Le pH de cette solution n'est également pas critique et sera choisi en fonction d'une part de la stabilité des sols utilisés et du caractère acide ou basique du support à imprégner. Ainsi, pour un support alumine, le pH de la solution colloïdale de cérium sera avantageusement compris entre 0,2 et 2.

Il est également possible de déposer d'autres éléments sur le support par imprégnation classique avec des solutions de sels décomposables en oxyde par traitement thermique.

Les catalyseurs de l'invention sont utilisés dans de nombreuses applications.

A titre d'exemple, les catalyseurs de l'invention conviennent parfaitement pour le traitement des gaz d'échappement des moteurs à combustion. Ainsi, le procédé de l'invention permet de réaliser les catalyseurs décrits dans le brevet européen n° 27069 et qui contiennent comme éléments actifs du fer et du cérium en plus des métaux précieux de la famille du platine couramment employés pour cette application. En effet, le cérium qui est un élément coûteux est déposé uniquement dans une couronne périphérique du support de largeur voisine de 400 µm correspondant à la couche de diffusion des gaz dans le catalyseur.

Ainsi le prix de revient du catalyseur est significativement diminué, tandis que les propriétés catalytiques sont conservées à un niveau au moins équivalent.

D'autres avantages, détails et buts de l'invention apparaitront plus clairement au vu des exemples donnés ci-dessous uniquement à titre indicatif.

### exemple 1

100 g de billes d'alumine de structure gamma sont préparées selon les procédés décrits dans les brevets français n° 1449904 et 1386364.

Ces billes ont une surface spécifique de 100 m²/g et un volume poreux total de 0,90 cm³/g. Le volume des micropores de diamètre supérieur à 1000 Å est de 0,20 cm³/g, le diamètre moyen des micropores est de 200 Å.

On prépare également une suspension colloïdale d'hydroxyde de cérium selon le procédé décrit dans le brevet européen n° 239 477.

Cette suspension homodisperse a les caractéristiques suivantes:
- concentration en CeO₂ : 300 g/l
- dimensions moyennes des colloïdes : 5 nm
On dilue cette suspension colloïdale pour obtenir une solution contenant 52 g/l de CeO₂ à pH = 1.

On pulvérise 90 cm³ de cette solution sur les 100 g de billes d'alumine maintenues en rotation, par exemple dans un bol tournant.

Après 30 minutes de contact, les billes sont séchées à 150°C puis calcinées sous air à 400°C pendant 3 heures.

Ce support contient 4,7% en poids de cérium exprimé en Ce par rapport à la masse totale du support.

Ce cérium est contenu entièrement dans une couronne périphérique de largeur 400 µm. Dans cette couronne la concentration en cérium est de : 10 % en poids.

### exemple 2

On répète l'exemple 1. Toutefois, la solution de cérium est à pH 0,5 et sa concentration est de 78,3 g/l.

Les billes d'alumine ont une surface spécifique de 100 m²/g, un volume poreux total de 1,20 cm³/g dont 0,45 cm³/g correspond au volume de micropores de dimension supérieure à 1000 Å. Le diamètre moyen des micropores correspondant à un volume de 0,75 cm³/g est d'environ 200 Å.

Le volume de solution de cérium pulvérisé est de 120 cm³
Les billes sont séchées et calcinées comme dans l'exemple 1.

Le support contient 9,4% de cérium par rapport au support total, le cérium étant déposé en totalité sur une couronne superficielle de 300 µm de largeur.

### exemple 3 (comparatif)

On imprègne 100 g de billes d'alumine présentant les caractéristiques des billes de l'exemple 1 par une solution aqueuse (90 cm³) de nitrate céreux à 52 g/l, selon les conditions opératoires indiquées dans l'exemple 1.

Le support ainsi obtenu contient 4,7 % de Ce en poids par rapport au support total. Toutefois, comme cela est indiqué dans le tableau I ci-dessous, le cérium est réparti sur toute la surface du support.

Les différents supports sont analysés par fluorescence X pour déterminer le profil de la concentration en cérium dans son épaisseur.

Pour cela, on récupère les billes d'alumine de 3,2 mm de diamètre. Des billes constituant un échantillon statistiquement représentatif sont partagées en deux parties égales et la concentration en cérium depuis la périphérie de la bille jusqu'au centre de celle-ci est déterminée par fluorescence X au moyen d'un appareil "EDAX".

Les résultats obtenus sont exprimés par le pourcentage pondéral moyen du cérium pour chaque tranche ou couronne de support. Ces résultats sont rassemblés dans le tableau ci-dessous.

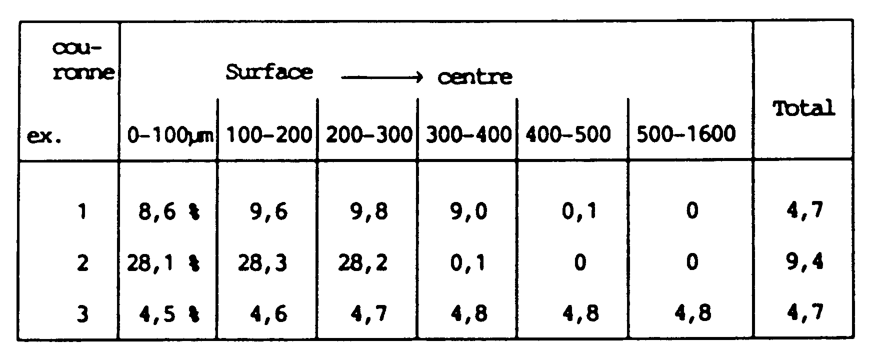

Ces résultats montrent clairement l'avantage des supports de l'invention et du procédé d'imprégnation qui permet de déposer le cérium uniquement sur une couche périphérique du support.

Bien entendu, d'autres éléments actifs tels que d'autres promoteurs comme le fer ou des métaux de la famille du platine peuvent être imprégnés avant ou après le dépôt de l'élément en question sur toute la surface du support ou uniquement sur une couronne périphérique. Pour cela on peut notamment mettre en oeuvre le procédé de l'invention.

## Revendications

1. Catalyseur supporté de type comprenant un support obtenu par mise en forme d'un matériau poreux sur lequel sont déposés des éléments catalytiquement actifs, caractérisé en ce que au moins un desdits éléments actifs est le cerium, ledit cérium étant déposé de manière homogène en concentration dans une couronne périphérique de largeur déterminée dudit support et le cérium étant déposé par imprégnation avec une solution colloïdale d'un composé du cérium, la concentration en élément cérium dans le support, en déhors de la couronne périphérique, étant voisine ou égale à zéro.

2. Catalyseur selon la revendication 1, caractérisé en ce que la largeur de la couronne périphérique de support est constante.

3. Catalyseur selon la revendication 1 ou 2, caractérisé en ce que le matériau poreux comprend des sites de surface actifs.

4. Catalyseur selon la revendication 1, 2 ou 3, caractérisé en ce que le matériau poreux est un oxyde minéral à caractère acide, basique ou amphotère.

5. Catalyseur selon l'une quelconque des revendications précédentes, caractérisé en ce que le matériau poreux est choisi dans le groupe comprenant l'alumine, la silice, l'oxyde de titane, l'oxyde de zirconium, l'oxyde de cérium ou un mélange de ceux-ci.

6. Catalyseur selon l'une quelconque des revendications précédentes, caractérisé en ce qu'il comprend des éléments catalytiquement actifs autres que le cérium, imprégnés sur toute la surface du support.

7. Catalyseur selon l'une quelconque des revendications précédentes, caractérisé en ce qu'il comprend les éléments catalytiquement actifs de la famille du platine imprégnés sur une couronne périphérique du support de largeur égale ou différente de celle correspondant a l'élément actif cérium.

8. Catalyseur selon la revendication 6 ou 7, caractérisé en ce qu'il comprend des éléments promoteurs.

9. Procédé de fabrication d'un catalyseur selon l'une des revendications précédentes du type consistant à imprégner un support en matériau poreux par une solution d'un composé d'un élément à déposer, à sécher le support ainsi imprégné et à le soumettre à un traitement thermique pour le réactiver, caractérisé en ce que l'imprégnation de l'élément actif cérium à déposer sur une couronne périphérique dudit support est réalisée par imprégnation avec une solution colloïdale d'un composé dudit cérium.

10. Procédé selon la revendication 9, caractérisé en ce que les particules de la solution colloïdale ont une dimension au plus égale à celle des micropores du matériau poreux constituant le support.

11. Procédé selon la revendication 10, caractérisé en ce que la dimension des particules de la solution colloïdale est au plus égale à 1000 Å (100 nm).

12. Procédé selon la revendication 11, caractérisé en ce que la dimension des particules de la solution colloïdale est inférieure à 100 Å (10 nm).

13. Procédé selon l'une des revendications 9 à 12, caractérisé en ce que la solution colloïdale est une solution colloïdale d'hydroxyde de cérium ou d'hydroxynitrate de cérium.

14. Procédé selon la revendication 13, caractérisé en ce que, pour un matériau poreux à caractère amphotère comme l'alumine, ladite solution colloïdale a un pH compris entre 0,2 et 2.

15. Procédé selon la revendication 13 ou 14, caractérisé en ce que la concentration en cérium, exprimée en oxyde de cérium, dans la solution colloïdale d'imprégnation est compris entre 20 et 400 g/l.

16. Utilisation d'un catalyseur selon l'une des revendications 1 à 8 pour le traitement de gaz d'échappement d'un moteur à combustion interne.

## Claims

1. A supported catalyst of the type comprising a support obtained by shaping a porous material on which catalytically active elements are deposited, characterised in that at least one of said active elements is cerium, said cerium being deposited in homogeneous manner in respect of concentration in a peripheral ring of given width on said support and the cerium being deposited by impregnation with a colloidal solution of a compound of cerium, the concentration of the element cerium in the support, outside of the peripheral ring, being close to or equal to zero.

2. A catalyst according to claim 1, characterised in that the width of the peripheral ring of the support is constant.

3. A catalyst according to claim 1 or claim 2 characterised in that the porous material comprises active surface sites.

4. A catalyst according to claim 1, claim 2 or claim 3 characterised in that the porous material is a mineral oxide of acid, basic or amphoteric character.

5. A catalyst according to any one of the preceding claims characterised in that the porous material is selected from the group comprising alumina, silica, titanium oxide, zirconium oxide, cerium oxide or a mixture thereof.

6. A catalyst according to any one of the preceding claims characterised in that it comprises the catalytically active elements, other than cerium, which are impregnated over the entire surface of the support.

7. A catalyst according to any one of the preceding claims characterised in that it comprises the catalytically active elements of the platinum family which are impregnated on a peripheral ring of the support of a width which is equal to or different from that corresponding to the active element cerium.

8. A catalyst according to claim 6 or claim 7 characterised in that it comprises promoter elements.

9. A process for the production of a catalyst according to one of the preceding claims of the type comprising impregnating a support of porous material by a solution of a compound of an element to be deposited, drying the support impregnated in that way and subjecting it to a thermal treatment for re-activating it, characterised in that impregnation of the active element cerium to be deposited on a peripheral ring of said support is effected by impregnation with a colloidal solution of a compound of said cerium.

10. A process according to claim 9 characterised in that the particles of the colloidal solution are of a dimension which is at most equal to that of the micropores of the porous material constituting the support.

11. A process according to claim 10 characterised in that the dimension of the particles of the colloidal solution is at most equal to 1000Å (100 mm).

12. A process according to claim 11 characterised in that the dimension of the particles of the colloidal solution is smaller than 100 Å (10 mm).

13. A process according to one of claims 9 to 12 characterised in that the colloidal solution is a colloidal solution of cerium hydroxide or cerium hydroxynitrate.

14. A process according to claim 13 characterised in that, for a porous material of amphoteric character such as alumina, said colloidal solution has a pH of between 0.2 and 2.

15. A process according to claim 13 or claim 14 characterised in that the concentration of cerium, expressed as cerium oxide, in the colloidal impregnation solution, is between 20 and 400 g/l.

16. Use of a catalyst according to one of claims 1 to 8 for the treatment of exhaust gases from all internal combustion engine.

## Patentansprüche

1. Trägerkatalysator, enthaltend einen Träger, der durch Formgebung eines porösen Materials erhalten ist, auf dem katalytisch aktive Elemente aufgebracht sind, dadurch gekennzeichnet, daß mindestens eines dieser aktiven Elemente Cer ist, wobei das Cer mit homogener Konzentration in Form eines peripheren Kranzes bestimmter Breite auf dem Träger aufgebracht ist und das Cer mittels Imprägnierung mit einer kolloidalen Lösung einer Cerverbindung aufgebracht ist, wobei die Konzentration des Elementes Cer auf dem Träger außerhalb des peripheren Kranzes etwa oder gleich Null ist.

2. Katalysator nach Anspruch 1, dadurch gekennzeichnet, daß die Breite des peripheren Kranzes des Trägers konstant ist.

3. Katalysator nach Anspruch 1 oder 2, dadurch gekennzeichnet, daß das poröse Material aktive Oberflächenstellen enthält.

4. Katalysator nach Anspruch 1, 2 oder 3, dadurch gekennzeichnet, daß das poröse Material ein mineralisches Oxid mit saurem, basischen oder amphoteren Charakter ist.

5. Katalysator nach einem der vorhergehenden Ansprüche, dadurch gekennzeichnet, daß das poröse Material aus der Gruppe von Aluminiumoxid, Siliciumdioxid, Titanoxid, Zirkoniumoxid, Ceroxid oder einer Mischung dieser Oxide ausgewählt ist.

6. Katalysator nach einem der vorhergehenden Ansprüche, dadurch gekennzeichnet, daß er weitere katalytisch aktive Elemente außer Cer enthält, mit denen die gesamte Oberfläche des Trägers imprägniert ist.

7. Katalysator nach einem der vorhergehenden Ansprüche, dadurch gekennzeichnet, daß er katalytische aktive Elemente aus der Platingruppe enthält, mit denen der Träger in Form eines peripheren Kranzes mit gleicher oder unterschiedlicher Breite wie die des aktiven Elementes Cer imprägniert ist.

8. Katalysator nach Anspruch 6 oder 7, dadurch gekennzeichnet, daß er aktivierende Elemente enthält.

9. Verfahren zur Herstellung eines Katalysators nach einem der vorhergehenden Ansprüche, das darin besteht, einen aus einem porösen Material bestehenden Träger mit einer Lösung einer aufzubringenden Elementverbindung zu imprägnieren, den so imprägnierten Träger zu trocknen und ihn einer thermischen Behandlung zur Reaktivierung zu unterwerfen, dadurch gekennzeichnet, daß die Imprägnierung des Trägers mit dem aufzubringenden aktiven Element Cer in Form eines peripheren Kranzes durch Imprägnierung mit einer kolloidalen Lösung einer Cerverbindung durchgeführt wird.

10. Verfahren nach Anspruch 9, dadurch gekennzeichnet, daß die Teilchen der kolloidalen Lösung eine Größe besitzen, die höchstens gleich der Mikroporengröße des porösen Materials ist, aus dem der Träger gebildet ist.

11. Verfahren nach Anspruch 10, dadurch gekennzeichnet, daß die Größe der Teilchen der kolloidalen Lösung höchstens 1.000 Å (100 nm) beträgt.

12. Verfahren nach Anspruch 11, dadurch gekennzeichnet, daß die Größe der Teilchen der kolloidalen Lösung kleiner als 100 Å (10 nm) ist.

13. Verfahren nach einem der Ansprüche 9 bis 12, dadurch gekennzeichnet, daß die kolloidale Lösung eine kolloidale Lösung von Cerhydroxid oder Cerhydroxynitrat ist.

14. Verfahren nach Anspruch 13, dadurch gekennzeichnet, daß bei einem porösen Material mit amphoterem Charakter wie Aluminiumoxid die kolloidale Lösung einen pH-Wert zwischen 0,2 und 2 aufweist.

15. Verfahren nach Anspruch 13 oder 14, dadurch gekennzeichnet, daß die Konzentration an Cer, ausgedrückt als Ceroxid, in der kolloidalen Imprägnierungslösung zwischen 20 und 400 g/l beträgt.

16. Verwendung eines Katalysators nach einem der Ansprüche 1 bis 8 zur Behandlung von Abgasen aus einem Verbrennungsmotor.
